# EUROPÄISCHE PATENTSCHRIFT

(11) **EP 1 874 582 B1**
(45) Veröffentlichungstag und Bekanntmachung des Hinweises auf die Patenterteilung: **31.12.2008**
(21) Anmeldenummer: 06724251.1
(22) Anmeldetag: 11.04.2006
(51) Int. Cl.: B60K 35/00, B60K 37/02, G06F 3/033

(54) **VERFAHREN ZUR DARSTELLUNG VON INFORMATIONEN IN EINEM VERKEHRSMITTEL UND KOMBIINSTRUMENT FÜR EIN KRAFTFAHRZEUG**
METHOD FOR THE REPRODUCTION OF INFORMATION IN A MEANS OF TRANSPORT AND COMBINED INSTRUMENT FOR A MOTOR VEHICLE
PROCEDE DE REPRESENTATION DE DONNEES DANS UN MOYEN DE TRANSPORT ET TABLEAU DE BORD D'UN VEHICULE AUTOMOBILE

(30) Priorität: 14.04.2005 DE 102005017313
(43) Veröffentlichungstag der Anmeldung: 09.01.2008
(60) Teilanmeldung: 08004594.1
(73) Patentinhaber: Volkswagen Aktiengesellschaft, 38436 Wolfsburg (DE)
(72) Erfinder: WENGELNIK, Heino, 38442 Wolfsburg (DE); SPECKS, Will, 38440 Wolfsburg (DE); KUHN, Mathias, 14109 Berlin (DE); DEHMANN, Rainer, 10963 Berlin (DE); BARTOSZEWSKI, Heiner, 38547 Calberlah (DE)
(74) Vertreter: Rabe, Andreas
(86) Internationale Anmeldenummer: PCT/EP2006/003333
(87) Internationale Veröffentlichungsnummer: WO 2006/108617

(56) Entgegenhaltungen:
- EP-A- 1 098 498
- EP-A- 1 462 297
- DE-A1- 10 003 326
- DE-A1- 10 224 016
- GB-A- 2 405 546
- US-A- 5 995 104

## Beschreibung

Die vorliegende Erfindung betrifft ein Verfahren zur Darstellung von Informationen in einem Verkehrsmittel, bei dem die Informationen in Form von hierarchischen Menüstrukturen dargestellt werden. Ferner betrifft die Erfindung ein Kraftfahrzeug mit einer Vorrichtung hierfür mit einer Steuereinheit und einer Anzeigeeinheit zur stereoskopischen und/oder autostereoskopischen Darstellung von Informationen.

In einem Kraftfahrzeug gibt es verschiedene Information- und Kommunikationsbereiche, denen Anzeigeinstrumente zugeordnet sind. Sie dienen der Information des Fahrers und der Mitfahrer. Ferner können sie den Fahrer bei der Navigation oder der Kommunikation mit der Außenwelt unterstützen. Die Anzeige kann insbesondere verkehrs- oder betriebsbezogene Daten des Fahrzeugs visuell darstellen. In der Nähe des primären Sichtfelds des Fahrers ist das sog. Kombiinstrument angeordnet. Üblicherweise befindet es sich im Cockpit hinter dem Lenkrad, wobei es durch eine Öffnung des Lenkrads sichtbar ist. Es dient insbesondere der Anzeige der Geschwindigkeit, des Tankinhalts, der Kühlertemperatur und anderer betriebsbezogener Informationen des Kraftfahrzeugs. Ferner können Radio- und Audiofunktionen dargestellt werden. Schließlich können Menüs für Telefon, Navigation, Telematikdienste und Multimediaanwendungen angezeigt werden. Als Display werden üblicherweise Flüssigkristallanzeigen in verschiedenen Ausführungen verwendet.

In der DE 100 01 988 A1 ist beispielsweise ein Kombiinstrument zur Anzeige von betriebs- und/oder verkehrsbezogenen Daten beschrieben. Um das vielfältige Informationsangebot besser aufnehmen zu können, wird in der DE 103 03 792 A1 eine perspektivische Darstellung dreidimensionaler Elemente vorgeschlagen.

Als weitere Anzeigeeinrichtung besitzt ein Fahrzeug häufig eine Multifunktionsanzeige in der Mittelkonsole oder oberhalb der Mittelkonsole. Ein solches Multifunktionsbedienelement ist beispielsweise in der DE 199 41 955 A1 beschrieben.

Um die vielfältigen Bedien- und Anzeigemöglichkeiten übersichtlich darzustellen, werden häufig hierarchische Menüstrukturen verwendet. Ein Menü zeigt verschiedene Menüpunkte und gegebenenfalls den Menüpunkten zugeordnete Grafiken oder Icons an. Bei der Auswahl eines Menüpunkts öffnet sich ein Untermenü mit weiteren Untermenüpunkten. Diese Struktur kann über mehrere Hierarchieebenen fortgeführt werden. Außerdem kann einem Menüpunkt anstatt eines Untermenüs ein bestimmtes Anzeigebild zugeordnet sein, welches die dem Menüpunkt zugeordnete Information darstellt.

Werden solche Menüstrukturen in einem Verkehrsmittel insbesondere in einem Kraftfahrzeug eingesetzt, soll die Aufmerksamkeit des Fahrers durch das Erfassen der dargestellten Information und durch die Bedienung der Anzeigevorrichtung nicht beeinträchtigt werden. Die Informationsdarstellung soll daher so intuitiv wie möglich erscheinen. Dabei sind dreidimensionale Darstellungen von Objekten bevorzugt gegenüber zweidimensionalen Projektionen dreidimensionaler Objekte.

Es sind verschiedene Technologien entwickelt worden dreidimensionale Darstellungen in Anzeigeinstrumenten zu realisieren. In den folgenden Druckschriften sind holographische Anzeigevorrichtungen für Kraftfahrzeuge beschrieben: DE 37 40 557 A1, DE 197 04 740 A1, GB 2 212 964 A, EP 0 891 887 B1. Nachteilhaft an holographischen Anzeigevorrichtungen ist jedoch, dass der Aufbau der Anzeigevorrichtungen sehr aufwändig und die drei dimensionale Darstellung nicht sehr wirklichkeitsnah ist.

Schließlich sind sog. autostereoskopische Anzeigevorrichtungen für Kraftfahrzeuge bekannt. Im Unterschied zu perspektivischen zweidimensionalen Darstellungen sieht das eine Auge ein geringfügig anderes Bild als das andere Auge. Hierdurch wird eine reale dreidimensionale Darstellung erreicht. Bei einer autostereoskopischen Anzeige sind keine speziellen Vorrichtungen, wie beispielsweise Brillen oder dgl., nötig, um den dreidimensionalen Effekt beim Betrachten der Anzeige hervorzurufen.

In der DE 102 25 385 A1 ist eine stereoskopische Anzeigevorrichtung für ein Fahrzeug beschrieben. Die Vorrichtung umfasst eine erste Anzeige, die dem Fahrer reale Bilder anzeigt. Ferner enthält die Vorrichtung einen Halbspiegel, der vor der ersten Anzeige angeordnet ist. Über einen Totalreflektionsspiegel werden von einer zweiten Anzeige erzeugte Bilder auf dem Halbspiegel dargestellt. Sie erscheinen dort als virtuelle Bilder. Die Anordnung wird dabei so gewählt, dass im Ergebnis ein virtuelles Bild an einer Position angezeigt wird, die von der Position eines an der ersten Anzeige angezeigten realen Bildes in der Tiefenrichtung entfernt derart angezeigt ist, dass durch das reale Bild und das virtuelle Bild ein dreidimensionales stereoskopisches Bild angezeigt werden kann. Nachteilhaft an dieser Vorrichtung ist jedoch, dass sie relativ viel Bauraum benötigt. Des Weiteren ist in der DE 37 12 170 A1 ein stereoskopisches Displaysystem beschrieben, bei welchem über eine Abbildungsoptik Bilder in die Windschutzscheibe des Kraftfahrzeugs projiziert werden. Hierdurch wird eine sog. Head-up-Anzeige realisiert. Auch dieses System erfordert relativ viel Bauraum und ist außerdem für die Anzeige in einem Kombiinstrument nicht geeignet.

Aus der EP 1 098 498 A1 ist ein weiteres Verfahren und eine weitere Vorrichtung zur stereoskopischen Anzeige von Bildern bekannt (beinhaltet die Merkmale des Oberbegriffs der Ansprüche 1 u. 19).

Es ist die Aufgabe der vorliegenden Erfindung, ein Verfahren und ein Kraftfahrzeug miteiner Vorrichtung bereitzustellen, bei denen die Darstellung von Informationen in einem Verkehrsmittel, insbesondere einem Kraftfahrzeug, verbessert ist.

Erfindungsgemäß wird diese Aufgabe durch ein Verfahren mit den Merkmalen des Anspruchs 1 und einem Kraftfahrzeug mit den Merkmalen des Anspruchs 19 gelöst. Vorteilhafte Aus- und Weiterbildungen ergeben sich aus den Unteransprüchen.

Bei dem erfindungsgemäßen Verfahren zur Darstellung von Informationen in einem Verkehrsmittel werden die Menüs oder Menüpunkte der hierarchischen Menüstrukturen stereoskopisch dargestellt, wobei zumindest zwei verschiedene Menüs für den Betrachter in verschiedenen Entfernungen erscheinen. Erfindungsgemäß sind die Menüs auf einem stereoskopisch dargestellten sich drehenden Ring angeordnet. Es hat sich herausgestellt, dass bei einer solchen Darstellung der Menüs bzw. Menüpunkte der Betrachter den Informationsgehalt besonders schnell erfassen kann. Durch die dreidimensionale Darstellung ist außerdem eine intuitive Bedienung in Räumen realisierbar.

Die Menüs bzw. Menüpunkte können bezogen auf eine Referenzebene in einer zu dem Betrachter hin versetzten Ebene dargestellt werden. Solche zu dem Betrachter hin versetzten Menüs bzw. Menüpunkte können beispielsweise teiltransparent dargestellt werden, so dass hintere Menüebenen noch sichtbar bleiben. Die Referenzebene wird beispielsweise von einer körperlichen Displayebene definiert, welche die stereoskopische Darstellung ermöglicht. Ferner können Menüs bzw. Menüpunkte bezogen auf die Referenzebene in einer von dem Betrachter weg versetzten Ebene dargestellt werden. Ein Menü gibt dem Betrachter einen oder mehrere Menüpunkte zur Auswahl. Ferner können einzelne Menüs oder auch Menüpunkte Objekte, wie beispielsweise Grafiken oder dgl., enthalten, welche den Inhalt des Menüs bzw. Menüpunkts veranschaulichen sollen.

Auch diese Objekte können bezogen auf die Referenzebene in einer zu dem Betrachter hin oder zu dem Betrachter weg versetzten Ebene dargestellt werden. Durch die Änderung des Abstands der Menüebenen bzw. Menüpunkte oder der in Menüs dargestellten Objekte kann ein Zuordnung zur Wichtigkeit oder Aktualität des Menüs, Menüpunkts oder des Objekts hergestellt werden. Dies erleichtert es dem Betrachter, die für ihn relevante Information schnell zu erfassen. Objekte oder Menüs bzw. Menüpunkte, die zu einem bestimmten Zeitpunkt eine geringere Bedeutung oder Wichtigkeit für den Betrachter haben, können beispielsweise in der vom Betrachter weg versetzten Ebene dargestellt werden. Zusätzlich können sie unscharf dargestellt werden. Die Schärfeeinstellung erfolgt somit kontextbezogen bzw. kontextgesteuert. Auch hierdurch wird die leichte Erfassbarkeit der dargestellten Informationen erreicht.

Die Änderungen der Darstellungsebenen, die Änderung der Transparenz oder der Schärfe kann über Animationen erfolgen, so dass beispielsweise ein Menü nach vorne oder hinten wandert, dabei immer schärfer oder unschärfer wird und gegebenenfalls auch seine Transparenz ändert.

Gemäß einer bevorzugten Ausgestaltung des erfindungsgemäßen Verfahrens wird nach der Auswahl eines Menüpunkts das diesem Menüpunkt zugeordnete Untermenü in einer Fläche geöffnet, die um eine Achse gedreht wird, bis die Fläche des Untermenüs in einer zu der Referenzebene parallelen Ebene dargestellt wird. Es wird somit das Untermenü zu dem Betrachter hingedreht, bis er es in einer dreidimensional hervorgehobenen Ebene betrachten kann. Dabei kann der Eindruck erzeugt werden, dass das Untermenü auf der Rückseite des hierarchisch höheren Menüs steht. Auf der Rückseite können z.B. Zusatzinformationen, Details, Memos oder Einstellungen angezeigt werden, die bei Auswahl des Menüpunktes dargestellt werden sollen. Die Drehachse ist bevorzugt vertikal oder horizontal ausgerichtet. Sie kann jedoch auch in einem schrägen Winkel liegen.

Gemäß weiteren Ausgestaltungen des erfindungsgemäßen Verfahrens sind die Menüs oder Menüpunkte auf den Flächen eines stereoskopisch dargestellten Würfels, auf den Innenflächen eines stereoskopisch dargestellten hohlen Würfels, auf der Oberfläche einer stereoskopisch dargestellten Kugel, auf einer stereoskopisch dargestellten sich drehenden Walze und/oder auf den Seiten eines stereoskopisch dargestellten geöffneten Buchs angeordnet. Ferner könnte die Menüstruktur wie ein Planetensystem dargestellt werden oder in einer Innen- und Außenansicht eines Fensters. Bei der Darstellung als Fenster kann beispielsweise die Darstellung der Fensterbank als Ablage für eine Statuszeile für Favoriten oder eine Informationstafel dienen. Des Weiteren kann ergänzend zu den Menüs ein sog. Avatar verwendet werden, der den Betrachter durch die Menüs führt, Warnhinweise gibt oder als Stellvertreter die Auswahl der Menüpunkte durchführt.

Des Weiteren können die Menüs in einem persönlichen Raum dargestellt werden, wie beispielsweise einem Haus, einem Auto oder anderen Räumen. Werden Sonderziele (Points of Interest) eines Navigationssystems dargestellt, kann man bei Auswahl dieser Ziele durch die dreidimensionale Darstellung detailliert in Räume, welche diesen Punkten zugeordnet sind, eintauchen. Ist beispielsweise ein Supermarkt ein solches Sonderziel, kann bei einer Auswahl dieses Zieles der Innenraum des Supermarkts dreidimensional dargestellt werden.

Betrifft ein Menü eine Einparkhilfe, können gerenderte abstrahierte Daten dreidimensional dargestellt werden, um dem Fahrer ein möglichst anschauliches und leicht erfassbares Bild der Parklücke zu geben.

Durch die dreidimensionale Darstellung können auch Bedienelemente stereoskopisch dargestellt werden. Auf diese Weise kann ein ganzes Cockpit virtuell auf einem Display realisiert werden, wobei die realen dreidimensionalen Elemente virtuelle dreidimensionale Entsprechungen finden.

Des Weiteren können die hierarchischen Menüstrukturen in einem Zwiebelmodell dargestellt werden, bei dem Menüs oder Objekte um das aktuelle Menü bzw. Objekt herum positioniert werden.

Gemäß einer weiteren Ausgestaltung des erfindungsgemäßen Verfahrens ist die Anzeige für eine automatische Distanzregelung einem Menü zugeordnet. In diesem Fall wird der Abstand zum vorausfahrenden Fahrzeug dreidimensional dargestellt, wobei auch Entfernungsangaben angezeigt werden können. Auf diese Weise kann der Abstand zum vorausfahrenden Fahrzeug besonders deutlich veranschaulicht werden, da der Abstand nicht über eine perspektivische Darstellung sondern über einen tatsächlichen dreidimensionalen Abstand wiedergegeben wird.

Gemäß einer weiteren Ausgestaltung des erfindungsgemäßen Verfahrens ist die Anzeige für die Routenführung eines Navigationssystems einem Menü zugeordnet. In diesem Fall kann die Route aus einer Vogelperspektive dreidimensional dargestellt werden. Ferner kann die Sichtweise des Fahrers dreidimensional sehr anschaulich dargestellt werden, so dass die Übertragung von der Anzeige des Navigationssystems auf die reale Umgebung erleichtert wird.

Sind bestimmten Menüs Warnhinweise zugeordnet, können die umso größer und aufdringlicher und insbesondere näher am Betrachter dargestellt werden, je wichtiger sie sind. Die Akkommodationszeit kann bei dem erfindungsgemäßen Verfahren dafür genutzt werden, dass zuerst wenige, insbesondere nur die wichtigen Informationen dargestellt werden und zeitlich danach mehr Information hinzukommt. Warnhinweise werden bei dem erfindungsgemäßen Verfahren bevorzugt immer vorn im Sichtbereich, d.h. vor den Menüs, dargestellt. Gegebenenfalls können die Warnhinweise auch halbtransparent dargestellt werden, so dass die Menüs im Hintergrund sichtbar bleiben.

Außerdem können zur Reduzierung der Akkommodationszeit Objekte oder Menüs vom Fern-Sehbereich in den Nah-Sehbereich folgen. Auch können Objekte oder Menüs zunächst zweidimensional dargestellt werden und dann in die dritte Dimension heraus- oder hereingezoomt werden.

Für die Navigation in den Menüstrukturen kann bei dem erfindungsgemäßen Verfahren eine räumliche Maus realisiert werden, die entweder frei im Raum bewegbar ist oder nur eine Tiefenbewegung in Blickrichtung des Betrachters erlaubt.

Gemäß einer bevorzugten Ausbildung des erfindungsgemäßen Verfahrens erfolgt die Auswahl von Menüpunkten durch Gesten. Die Gesten können beispielsweise durch Infrarotsensoren erfasst werden und in die Menüsteuerung umgesetzt werden. Eine derartige Steuerung ist insbesondere in Verkehrsmitteln vorteilhaft, da in diesem Fall nicht genau eine Taste oder dgl. getroffen werden muss. Es reicht beispielsweise eine Geste zum Umblättern eines Buchs aus, um die Anzeige eines neuen Menüs zu erhalten.

Gemäß einer anderen Ausgestaltung kann die Auswahl von Menüpunkten durch Berührung eines Displays für die stereoskopische Darstellung erfolgen. Dabei kann die Auswahl durch Berührung des Displays bei einer virtuellen stereoskopisch dargestellten Taste erfolgen, wobei nach der Berührung die Taste vom Betrachter weg versetzt dargestellt wird. Das Drücken einer realen Taste findet auf diese Weise seine Entsprechung in der dreidimensionalen Darstellung auf dem Display.

Wird Information auf einer senkrecht zur Blickrichtung eines Betrachters ausgerichteten Fläche dargestellt, kann die zu dieser Information gehörige Detailinformation auf der Rückseite dieser Fläche dargestellt sein, wobei die Rückseite für den Betrachter durch eine stereoskopische Drehung der Fläche um 180° sichtbar wird.

Wird Information dargestellt, die einen Teil des Verkehrsmittels betrifft, wandert die stereoskopische Repräsentation dieses Teils bei einer Ausbildung des erfindungsgemäßen Verfahrens aus der Richtung des körperlichen Teils im Verkehrsmittel ins Blickfeld des Betrachters. Auf diese Weise kann der Betrachter sehr leicht erfassen, welches Teil dargestellt ist.

Gemäß einer weiteren bevorzugten Weiterbildung des Verfahrens werden die dreidimensionalen Bewegungen einer Bedieneinrichtung mittels der stereoskopischen Darstellung dreidimensional wiedergegeben. Es erfolgt somit eine optische Rückmeldung tatsächlich ausgeführter dreidimensionaler Bewegungen im dreidimensionalen Raum. Hierdurch wird die Betätigung der Bedieneinrichtung erleichtert.

Bei dem erfindungsgemäßen Verfahren kann zumindest die Geschwindigkeit und/oder die Motordrehzahl in Form eines Rundinstruments stereoskopisch angezeigt werden, ferner kann beispielsweise auch die Kühlertemperatur und/oder der Füllstand des Tanks in Form eines Rundinstruments stereoskopisch angezeigt werden. Wird in einem Menü das Verkehrsmittel oder ein Teil davon dargestellt, kann dies durch eine stereoskopische Augpunktdarstellung erfolgen. Besonders bevorzugt sind hierbei Ansichten von oben, und zwar von schräg hinten oder schräg vorne.

Vorzugsweise umfasst ein Menü eine stereoskopische Darstellung des Innenraums des Verkehrsmittels, bei der Licht-, Audio- und/oder Klimaquellen im Innenraum dargestellt sind. Auf diese Weise lassen sich besonders einfach die vielfältigen Licht-, Audio- und/oder Klimaquellen im Verkehrsmittel steuern.

Gemäß einer weiteren bevorzugten Ausgestaltung des erfindungsgemäßen Verfahrens umfasst ein Menü die stereoskopische Darstellung eines Kompass. Der Kompass umfasst vorzugsweise eine stereoskopisch dargestellte Scheibe, die schräg von oben betrachtet wird. Hierdurch wird die Ablesbarkeit des Kompass wesentlich verbessert, da eine Zuordnung des Kompass in der Fahrumgebung erleichtert wird.

Bevorzugt erfolgen alle dreidimensionalen Darstellungen des erfindungsgemäßen Verfahrens autostereoskopisch. Dies bedeutet, dass für den dreidimensionalen Eindruck der Darstellung keine zusätzlichen Hilfsmittel, wie beispielsweise eine Brille, erforderlich sind. Dies ist bei einem Einsatz des Verfahrens in einem Kraftfahrzeug besonders wichtig, da der Betrachter ständig zwischen dem Blick in die reale Fahrumgebung und einem Blick auf die dreidimensional dargestellte Information wechselt.

Außerdem betrifft die Erfindung ein Kraftfahrzeug, welches eine Vorrichtung zur Darstellung von Informationen umfasst, bei der mit der Steuereinheit die Darstellung der Menüs so berechenbar ist, dass zumindest zwei verschiedene Menüs oder Menüpunkte von der Anzeigeeinheit für den Betrachter in verschiedenen Entfernungen darstellbar sind. Die erfindungsgemäße Vorrichtung führt somit das vorstehend beschriebenen Verfahrens durch. Die Steuereinheit erzeugt dabei die Daten, die für die autostereoskopische Darstellung von Menüs oder Objekten erforderlich sind. Bei diesem Kraftfahrzeug ist die Anzeigeeinheit in Blickrichtung des Fahrers hinter einem Lenkrad angeordnet. Die Anzeigeeinheit ist somit am Ort eines konventionellen Kombiinstruments angeordnet.

Gemäß einer anderen Ausgestaltung ist ein Spiegel vorgesehen, der so angeordnet ist, dass er die stereoskopische Anzeige der Anzeigeeinheit zu einem Betrachter hinspiegelt. Der Spiegel kann halbdurchlässig sein und zwischen dem Fahrer und weiteren Anzeigeinstrumenten angeordnet sein. In diesem Fall kann die dreidimensionale Anzeige vor einem herkömmlichen Kombiinstrument erscheinen und dieses gegebenenfalls ergänzen. Die Anzeigeeinheit kann dabei oberhalb oder unterhalb des Spiegels angeordnet sein. Die Anzeigeeinheit kann außerdem so angeordnet sein, dass ihre Anzeige über die Windschutzscheibe zum Betrachter gespiegelt wird. Die Windschutzscheibe wirkt in diesem Fall als halbdurchlässiger Spiegel. Zwischen der Anzeigeeinheit und der Windschutzscheibe kann auch eine Optik zur Verlängerung des optischen Weges angeordnet sein. In diesem Fall kann ein sog. Head-up-Display realisiert werden.

Erfindungsgemäß ist mit der Steuereinheit die Darstellung der Menüs so berechenbar, dass die Menüs auf einem stereoskopisch dargestellten sich drehenden Ring angeordnet sind.

Die Erfindung wird nun anhand von Ausführungsbeispielen mit Bezug zu den Zeichnungen erläutert.
Fig. 1 zeigt schematisch den allgemeinen Aufbau eines Ausführungsbeispiels der erfindungsgemäßen Vorrichtung,
Fig. 2 zeigt schematisch den Aufbau des Displays,
Fig. 3 zeigt ein Beispiel eines Kombiinstruments, das in ein Kraftfahrzeug eingebaut ist,
Fig. 4 zeigt schematisch die Lichtemission des Displays gemäß einem Beispiel,
Fig. 5 zeigt eine von acht Ansichten für die stereoskopische Darstellung eines Menüs,
Fig. 6 zeigt die Lichtemission des Displays gemäß einem anderen Beispiel,
Fig. 7 zeigt ein weiteres Ausführungsbeispiel der erfindungsgemäßen Vorrichtung,
Fig. 8 zeigt noch ein weiteres Ausführungsbeispiel der erfindungsgemäßen Vorrichtung,
Fig. 9 zeigt noch ein weiteres Ausführungsbeispiel der erfindungsgemäßen Vorrichtung, durch welches ein Head-up-Display realisiert wird,
Fig. 10 zeigt ein weiteres Ausführungsbeispiel für die erfindungsgemäße Vorrichtung, welche Information in der Mittelkonsole eines Fahrzeugs darstellt,
Fig. 11 zeigt ein weiteres Ausführungsbeispiel, das dem in Fig. 11 gezeigten Ausführungsbeispiel entspricht, bei dem jedoch eine andere Art der Informationsdarstellung gewählt wurde,
Fig. 12 zeigt schematisch, in welchen Ebenen verschiedene Menüs gemäß einem Ausführungsbeispiel des erfindungsgemäßen Verfahrens dargestellt werden,
Fig. 13 zeigt eine Ansicht des Navigationsmenüs, die gemäß einem Ausführungsbeispiel der Erfindung gezeigt wird,
Fig. 14 zeigt eine Bildfolge, welche eine Animation gemäß einem Ausführungsbeispiel des erfindungsgemäßen Verfahrens veranschaulicht,
Fig. 15 zeigt eine Bildfolge mit einer anderen Animation, die gemäß einem Ausführungsbeispiel der vorliegenden Erfindung dargestellt wird,
Fig. 16 zeigt ein Menü, das gemäß einem Ausführungsbeispiel des erfindungsgemäßen Verfahrens dargestellt ist,
Fig. 17 zeigt einen Warnhinweis, der gemäß einem Ausführungsbeispiel des erfindungsgemäßen Verfahrens angezeigt wird,
Fig. 18 zeigt einen zu einem Menü gehörigen Hinweis, der bei einem Ausführungsbeispiel des erfindungsgemäßen Verfahrens dargestellt wird,
Fig. 19 zeigt einen anderen Hinweis, der bei einem Ausführungsbeispiel des erfindungsgemäßen Verfahrens dargestellt wird,
Fig. 20 zeigt ein Untermenü des Navigationsmenüs, bei dem als Objekt der Straßenverlauf dargestellt wird und
Fig. 21 zeigt eine Kompassdarstellung nach einem Ausführungsbeispiel des erfindungsgemäßen Verfahrens.

Es wird darauf hingewiesen, dass die zweidimensionalen Darstellungen der beigefügten Zeichnungen bei den Ausführungsbeispielen der Erfindung dreidimensional autostereoskopisch dargestellt werden. Elemente der Darstellungen werden somit dreidimensional vor und hinter der Displayebene dargestellt, wobei es für den Betrachter möglich ist, durch eine Änderung des Betrachtungswinkels die dreidimensional dargestellten Objekte auch in einem begrenzten Winkelbereich von der Seite bzw. von oben oder unten zu betrachten.

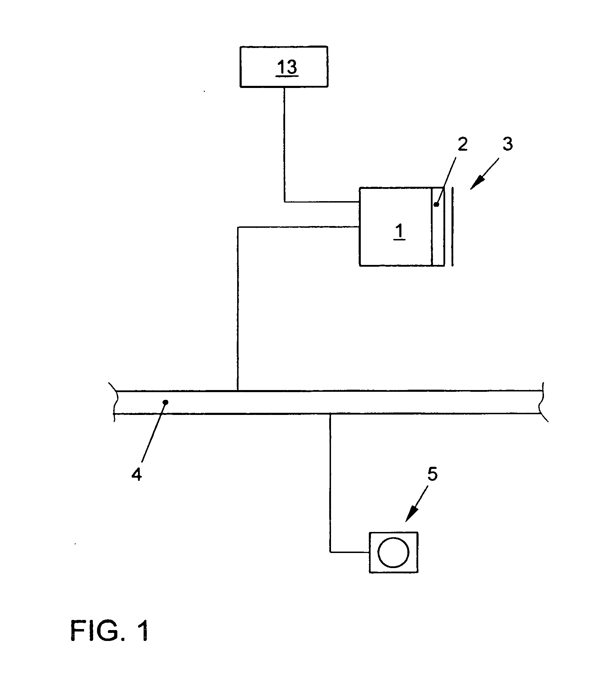

Mit Bezug zu Fig. 1 wird der grundsätzliche Aufbau einer Vorrichtung zur Darstellung von Informationen erläutert. Die Vorrichtung wird in einem Verkehrsmittel insbesondere in einem Kraftfahrzeug eingesetzt.

Als zentrale Einheit weist die Vorrichtung eine Steuereinheit 1 auf. Sie steuert die Darstellung von Bildern, die von der mit der Steuereinheit 1 verbundenen Anzeigeeinheit 2 dargestellt werden. Die Anzeigeeinheit 2 umfasst ein Display zur autostereoskopen dreidimensionalen Darstellung von Bildern. Um die autostereoskopische Wirkung zu erzielen ist vor dem Display eine Maske 3 angeordnet, welche die Lichtemission des von dem Display abgestrahlten Lichts so verändert, dass autostereoskopische Bilder darstellbar sind. Details zu der Anzeigeeinheit werden später erläutert.

Die Steuereinheit ist mit einem Fahrzeugbus 4 verbunden. Ferner ist eine Bedieneinrichtung 5 mit dem Fahrzeugbus 4 verbunden. Die Bedieneinrichtung 5 umfasst ein dreidimensional betätigbares Bedienelement, mit welchem sich verschiedenste Funktionen, die in dem Kraftfahrzeug ausführbar sind, steuerbar sind. Die diesen Funktionen zugeordneten Anzeigen werden von der Anzeigeeinheit 2 dargestellt. Hierfür empfängt die Steuereinheit die Signale der Bedieneinrichtung 5 über den Fahrzeugbus 4. Die diesen Eingangssignalen zugeordneten Anzeigebilder lädt die Steuereinheit 1 aus einem Speicher 13. Die Anzeigedaten für die autostereoskopische Darstellung der Bilder werden dann von der Steuereinheit 1 an die Anzeigeeinheit 2 übertragen, bei der sie auf dem Display dargestellt werden. Die Funktionen, die von der Bedieneinrichtung 5 ausführbar sind und welche entsprechend von der Anzeigeeinheit 2 angezeigt werden, umfassen alle Funktionen, die bisher und die ggf. in Zukunft von herkömmlichen zweidimensionalen Anzeigeeinrichtungen eines Kraftfahrzeugs oder eines anderen Verkehrsmittels angezeigt werden. Die Besonderheiten der vorliegenden Erfindung liegen in der Ansteuerung der Anzeigeeinheit 2 und der Darstellung der Anzeigebilder sowie in der Darstellung von hierarchischen Menüstrukturen.

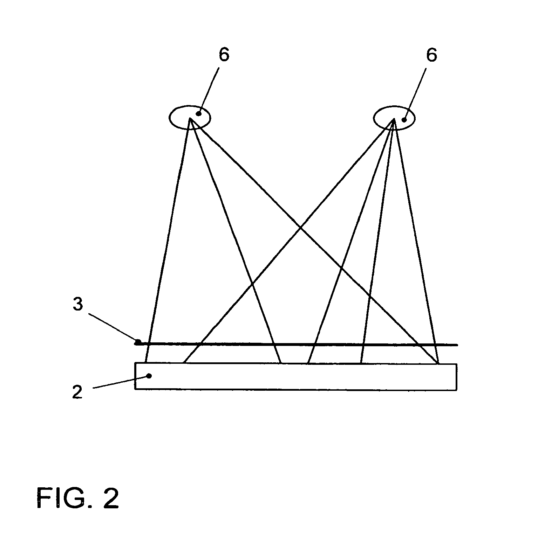

Fig. 2 zeigt die Anzeigeeinheit 2, vor der die Maske 3 angeordnet ist. Schematisch sind auch die Augen 6 eines Betrachters dargestellt. Das Display der Anzeigeeinheit 2 ist ein herkömmliches TFT-LCD- oder ein Plasma-Display mit einer Vielzahl von Bildpunkten, wobei jeder Bildpunkt die drei Farben Rot, Gelb, Blau darstellen kann. Bei der Maske 3 handelt es sich insbesondere um eine wellenlängenselektive Filtermaske bzw. eine optische Strukturmaske. Die Maske ermöglicht es, dass zwischen Teilbildern, die zu verschiedenen Ansichten gehören, zu unterscheiden und jede Ansicht in eine andere Richtung abzustrahlen. Es können somit Teilbilder für das rechte und für das linke Auge getrennt werden. Beim Betrachten der Anzeigeeinheit 2 können die Teilbilder zu einer dreidimensionalen Ansicht, zusammengesetzt werden. Hierfür sind keine weiteren Hilfsmittel, wie Brillen oder dgl., erforderlich. Hinsichtlich weiterer Details der Anzeigeeinheit 2 wird auf die DE 103 09 194 A1 und die DE 103 20 530 A1 verwiesen.

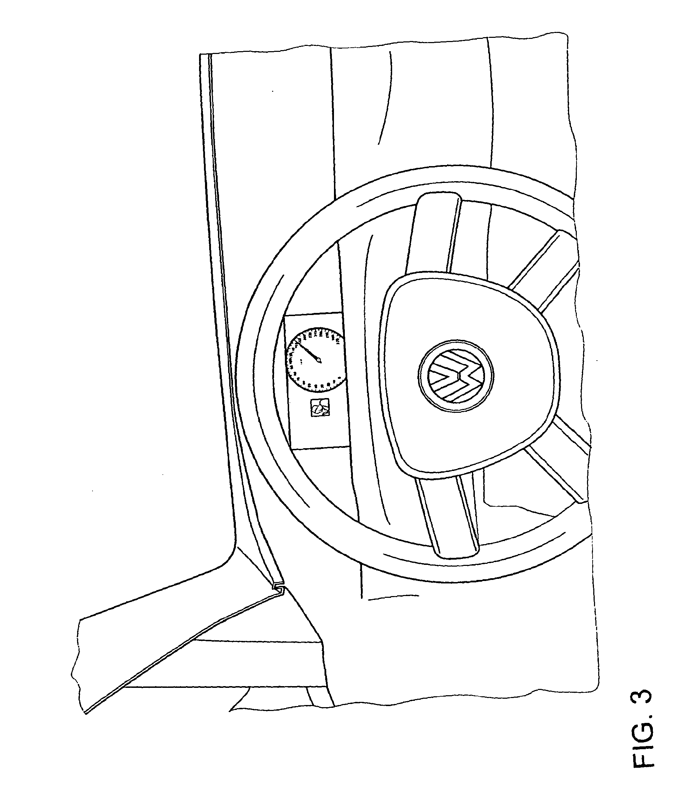

Fig. 3 zeigt ein Kombiinstrument in einem Kraftfahrzeug, bei welchem die Rundinstrumente, Menüs und andere Anzeigen von der Anzeigeeinheit 2 stereoskopisch dargestellt werden. Das Kombiinstrument ist an dem üblichen Ort hinter dem Lenkrad im Cockpit eines Kraftfahrzeugs untergebracht.

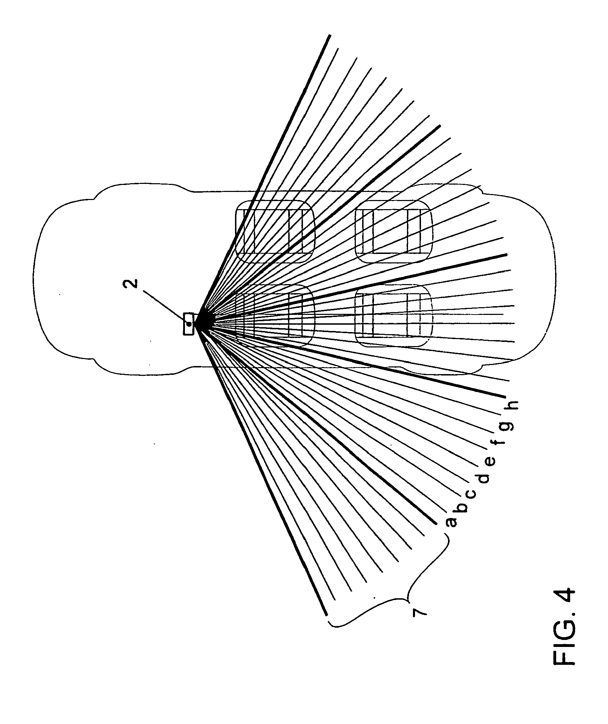

In Fig. 4 ist dargestellt, wie ein dreidimensionales Anzeigebild von der Anzeigeeinheit 2 abgestrahlt wird.

Das dreidimensionale Bild wird von einem Bildpaar erzeugt, von dem das rechte Auge eine Ansicht und das linke Auge eine andere Ansicht sieht. Die Trennung dieser Teilbilder erfolgt, wie beschrieben, über die Struktur- bzw. Filtermaske 3. Diese Bildtrennung ist jedoch nur in einem bestimmten Raumwinkel möglich. Bewegt der Betrachter sich beispielsweise in einer horizontalen Ebene zur Seite, wird die Trennung der Teilbilder aufgehoben und die Darstellung wird zweidimensional. Um möglichst viele Bildpaare für eine korrekte dreidimensionale Darstellung im Raum zu erzeugen, werden für ein Anzeigebild mehrere Ansichten dargestellt. Die Teilbilder dieser verschiedenen Ansichten werden in etwa fächerförmig horizontal abgestrahlt, so dass sich der horizontale Sichtfächer 7 bildet. Bei dem Ausführungsbeispiel wurden insgesamt acht Ansichten a bis h gewählt. Der Öffnungswinkel des Sichtfächers 7 betrug 27°. Es hat sich herausgestellt, dass acht Ansichten bei einem 4 Zoll großem Display besonders bevorzugt sind. In diesem Fall ist die Helligkeit, Auflösung und die räumliche Wiedergabe ausreichend. Die Auflösung des Displays war in diesem Fall größer 150 dpi.

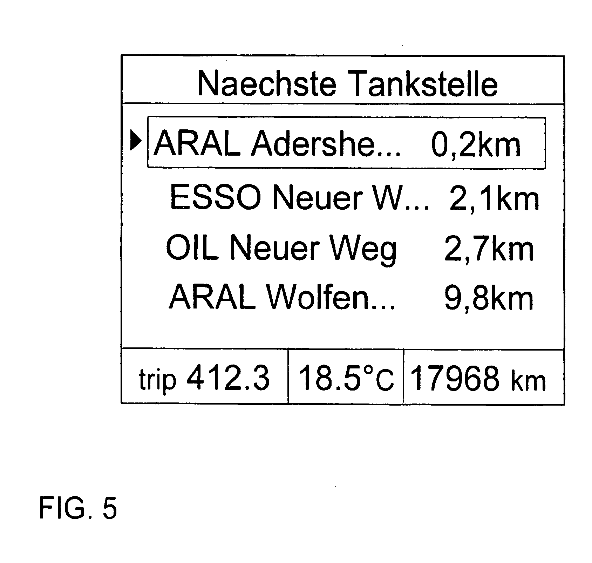

Damit alle Fahrzeuginsassen einen räumlichen Eindruck erhalten, werden insgesamt fünf Sichtfächer 7 nebeneinandergesetzt. Auf diese Weise wird eine Sichtzone gebildet, in welcher Anzeigebilder dreidimensional wiedergegeben werden. Fig. 5 zeigt eine der Ansichten a bis h, welche für ein Anzeigebild eines Menüs von der Anzeigeeinheit 2 wiedergegeben werden.

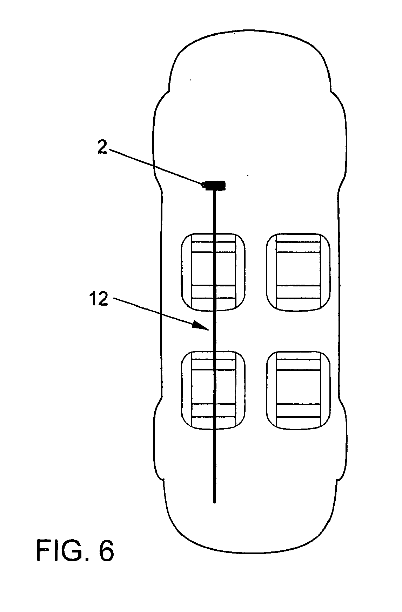

Fig. 6 zeigt ein anderes Beispiel, bei dem die Anzeigeeinheit 2 nur zwei Ansichten abstrahlt. Um in diesem Fall eine dreidimensionale Ansicht des Anzeigebildes über einen Öffnungswinkel von ca. 25° zu gewährleisten, ist die Maske 3 parallel zu dem Display der Anzeigeeinheit 2 bewegbar. Bei der Maske 3 handelt es sich in diesem Fall um eine optische Prismenmaske. Ferner ist bei diesem Ausführungsbeispiel eine mit der Steuereinheit verbundene Einrichtung zum Verfolgen der Augenposition vorgesehen. In Abhängigkeit von der Augenposition wird durch die Steuereinheit 1 und einen geeigneten Antrieb die Maske 3 so verschoben, dass sie der Augenposition folgt. Die zentrale dreidimensionale Sichtlinie ist in Fig. 6 mit 12 bezeichnet.

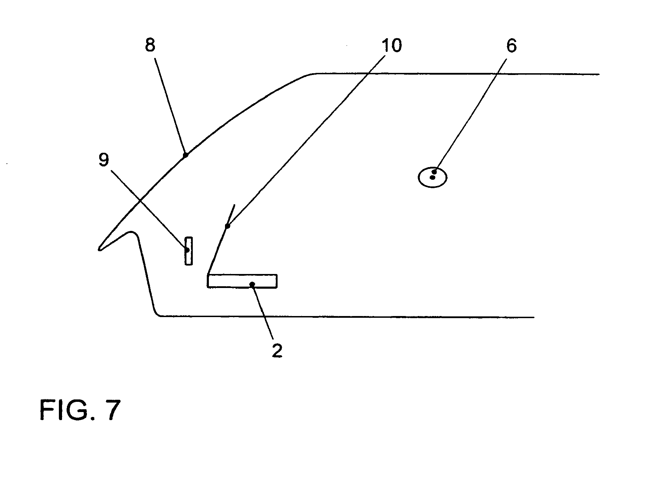

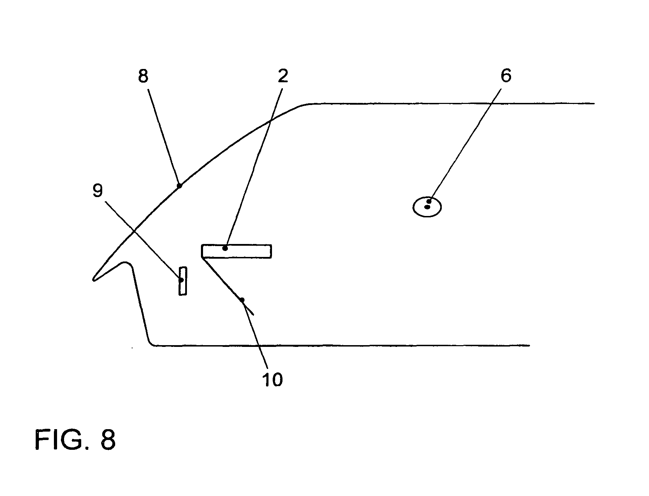

In den Fig. 7 bis 9 sind weitere Ausführungsbeispiele der erfindungsgemäßen Vorrichtung gezeigt. Bei ihnen sehen die Augen 6 des Betrachters das dreidimensionale Anzeigebild der Anzeigeeinheit 2 über einen halbdurchlässigen Spiegel. Der halbdurchlässige Spiegel 10 in den in den Fig. 7 und 8 gezeigten Ausführungsbeispielen ist dabei vor konventionellen Rundinstrumenten 9 angeordnet. Auf diese Weise kann ein dreidimensionales Anzeigebild entweder von unten (Fig. 7) oder von oben (Fig. 8) vor ein herkömmliches Kombiinstrument bzw. deren Rundinstrumente eingespiegelt werden.

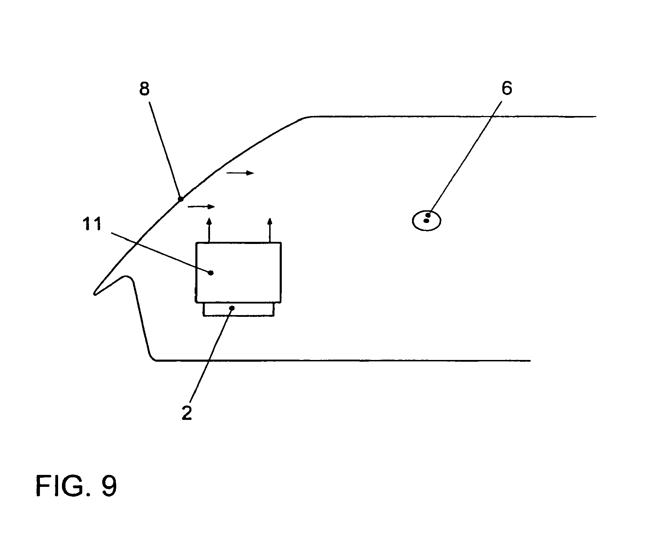

Bei dem in Fig. 9 gezeigten Beispiel wird ein sog. Head-up-Display dadurch realisiert, dass das von der Anzeigeeinheit 2 abgestrahlte Licht über eine Optik 11 zur Verlängerung des optischen Weges auf die Windschutzscheibe 8 geworfen wird, deren Reflektionsvermögen ausreicht, um den Augen 6 des Betrachters das dreidimensionale Anzeigebild in der Windschutzscheibe 8 zu zeigen.

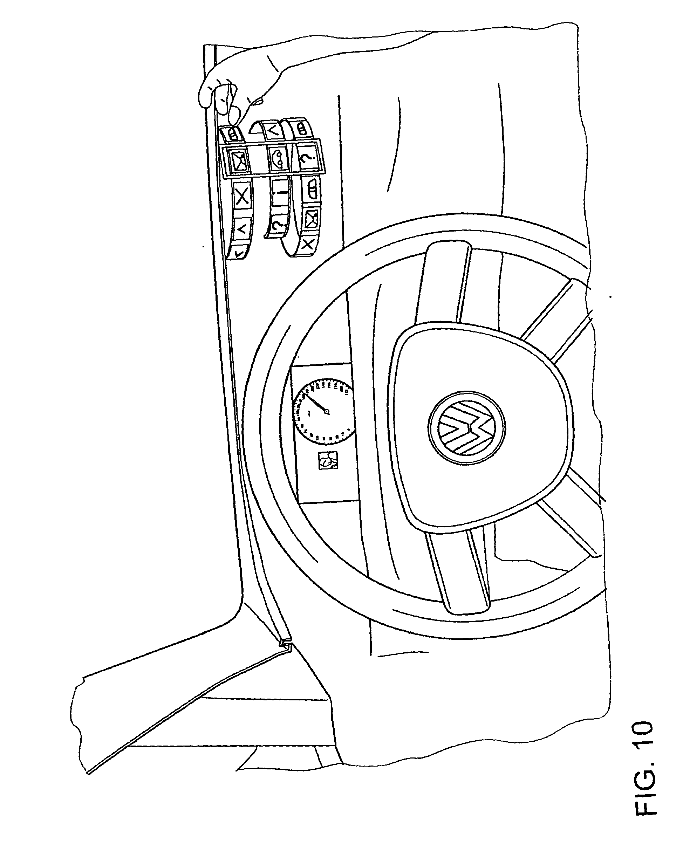

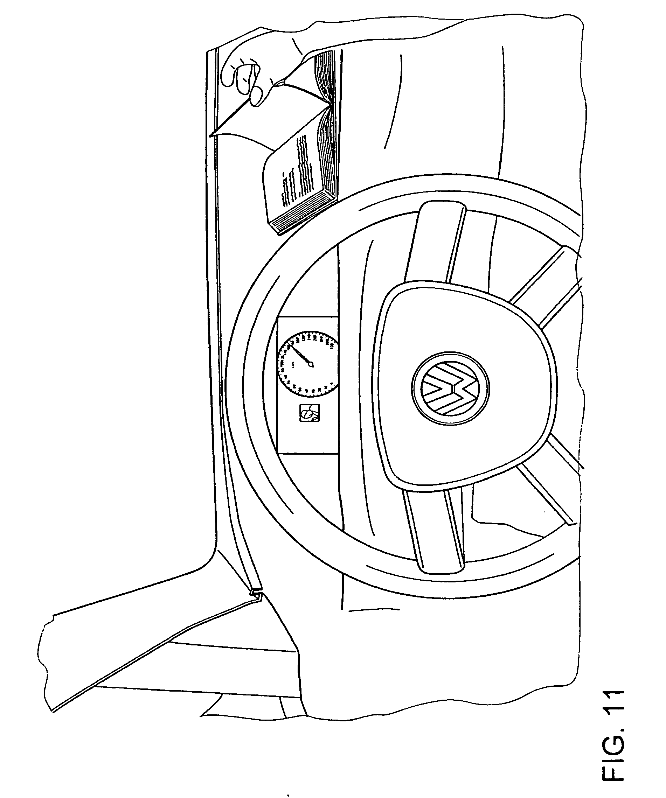

In den Fig. 10 und 11 sind weitere Ausführungsbeispiele der erfindungsgemäßen Vorrichtung gezeigt. Bei dem Beispiel der Fig. 10 befindet sich in der Mittelkonsole eine von der Anzeigeeinheit 2 stereoskopisch dargestellte sich drehende Walze. Wie in Fig. 10 angedeutet, kann die Drehung der Walze durch Gesten gesteuert werden. Hierfür werden die Handbewegungen von Infrarotsensoren aufgenommen und in eine Veränderung des Anzeigebildes umgesetzt.

Bei dem in Fig. 11 gezeigten Ausführungsbeispiel wird von der Anzeigeeinheit 2 ein aufgeschlagenes Buch stereoskopisch dargestellt, deren Seiten durch Gestensteuerung umgeblättert werden können.

Im Folgenden wird ein Ausführungsbeispiel des erfindungsgemäßen Verfahrens erläutert. Für die Durchführung dieses Verfahrens können die vorstehend beschriebenen Vorrichtungen verwendet werden.

Bei dem Verfahren sollen Informationen in einem Verkehrsmittel, insbesondere einem Kraftfahrzeug, dargestellt werden. Die Informationen sind in Form von hierarchischen Menüstrukturen organisiert. D.h., man gelangt von einem Hauptmenü durch Auswahl eines Menüpunkts zu einem hierarchisch tieferen Menü, welches wiederum Menüpunkte aufweist. Innerhalb der Menüs oder am Ende eines hierarchischen Menüzweigs werden die den Menüs zugeordneten Objekte dargestellt. Dies können beispielsweise Anzeigen für betriebs- oder verkehrsbezogene Daten sein.

Bei dem erfindungsgemäßen Verfahren werden die Menüs autostereoskopisch dargestellt, wobei zumindest zwei verschiedene Menüs oder Menüpunkte für den Betrachter in verschiedenen Entfernungen erscheinen. Hierfür sind in der Speichereinheit 13 die erforderlichen Ansichten für die autostereoskopische Darstellung des Menüs gespeichert. Bei einem Aufruf eines Menüs werden diese Ansichten von der Steuereinheit geladen und an die Anzeigeeinheit 2 übertragen. Auf dem Display der Anzeigeeinheit 2 werden die Ansichten dann so dargestellt, dass sich für den Betrachter eine dreidimensionale Ansicht ergibt.

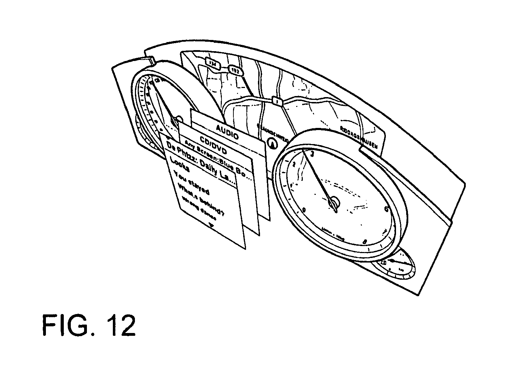

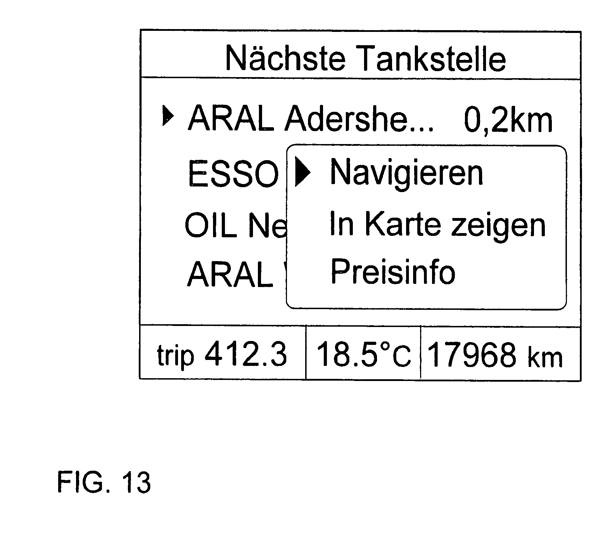

In Fig. 12 ist dargestellt, wie verschiedene Menüs in Ebenen dargestellt werden, die von der körperlichen Displayebene zum Betrachter hin versetzt sind. In Fig. 13 ist gezeigt, wie beim Aufruf eines Menüpunktes ein Untermenü erscheint, das in einer zum Betrachter hin versetzten Ebene dargestellt wird. Es ist teiltransparent, so dass sich das darunter liegende Menü noch erkennen lässt. Gleichermaßen können Menüs oder Menüpunkte, die bei einem bestimmten Anzeigebild von geringerer Bedeutung sind, unscharf dargestellt werden und/oder in einer von dem Betrachter weg versetzten Ebene dargestellt werden.

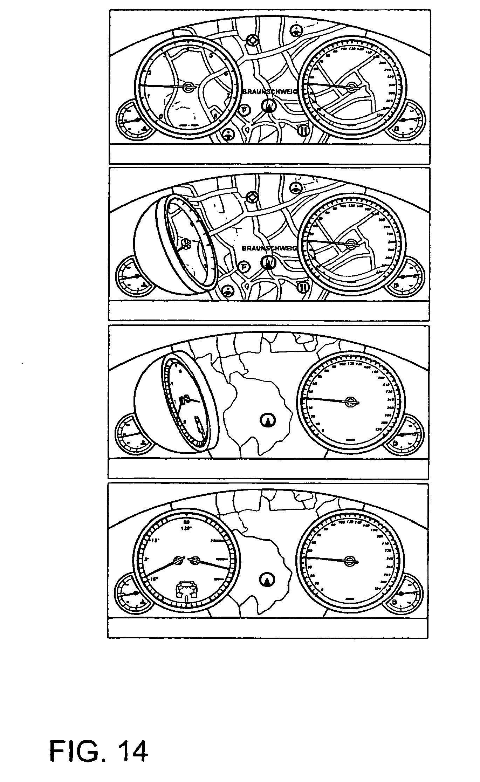

Beim Übergang von einer Darstellung zu einer anderen können Animationen gezeigt werden, durch welche ein fließender Übergang von einer Darstellung zu einer anderen erfolgt. Die Anzeigedaten für diese Animationen werden von der Steuereinheit 1 berechnet oder die Steuereinheit 1 lädt zu den Animationen gehörigen Bilder aus der Speichereinheit 13. In Fig. 14 sind Teilbilder einer solchen Animation gezeigt. Im ersten Teilbild ist im Hintergrund ein Kartenausschnitt des Navigationssystems gezeigt. In einer zum Betrachter hin versetzten Ebene sind dreidimensional Rundinstrumente für die Geschwindigkeit und Drehzahl gezeigt. In einer Ebene zwischen den Rundinstrumenten für Geschwindigkeit und Drehzahl und der Karte des Navigationssystems sind Rundinstrumente für die Kühlertemperatur und den Tankinhalt gezeigt. Wird beispielsweise durch die Bedieneinrichtung 5 oder durch Berührung des Displays das Rundinstrument für die Drehzahl ausgewählt, wird dieses dreidimensional um eine vertikale Achse gedreht, bis man die virtuelle Rückseite dieses Rundinstrumentes sieht, auf der weitere Detailinformationen zur Umgebung des Fahrzeugs angezeigt werden. Es wird z.B. die Fahrtrichtung, die Fahrbahnsteigung und die Höhe angezeigt.

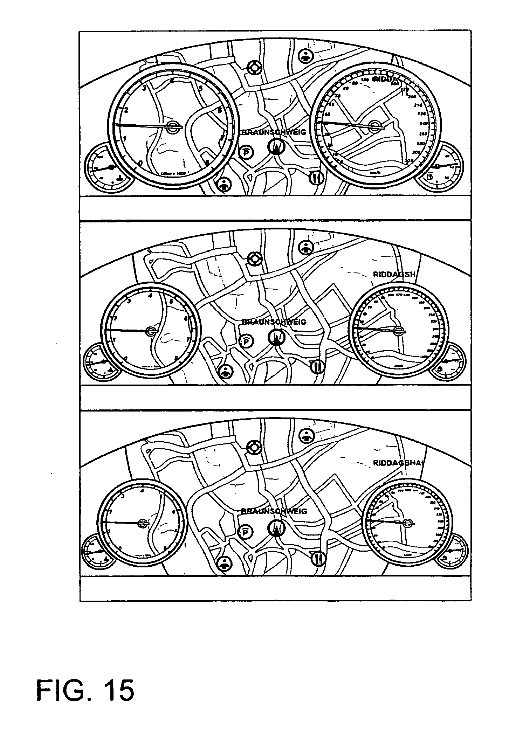

In Fig. 15 sind drei Teilbilder einer weiteren Animation gezeigt. In diesem Fall wird der Menüpunkt Navigationssystem ausgewählt. Daraufhin wandern die Rundinstrumente zur Seite, werden dabei verkleinert, so dass ein größerer Teil des im Hintergrund liegenden Kartenausschnitts gezeigt wird.

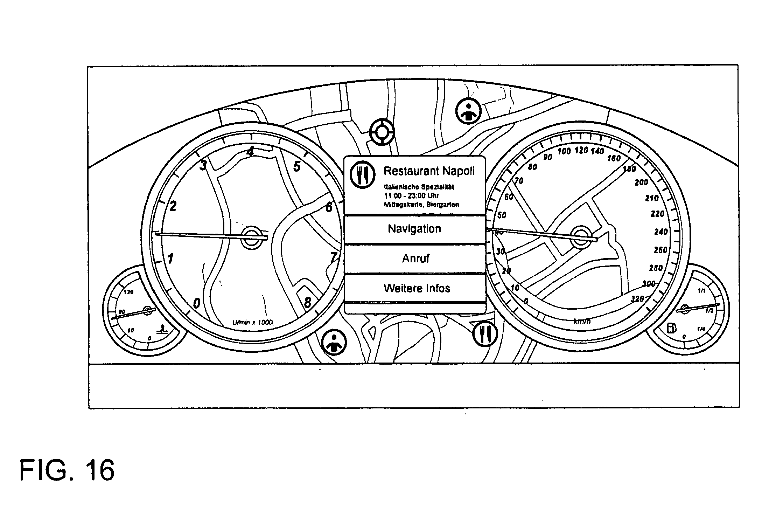

Bei einer Auswahl von Menüpunkten des Kartenausschnitts, wie beispielsweise einem Sonderziel (Point of Interest), kann ein Menü in einer zum Betrachter hin versetzten Ebene dargestellt werden, welches Detailinformationen zu diesem Ort anzeigt. Eine solche Menüdarstellung ist in Fig. 16 gezeigt.

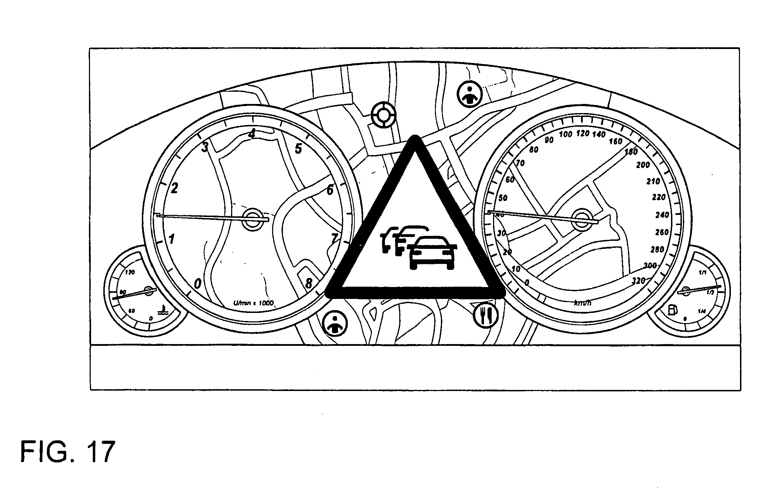

Bei dem Verfahren können außerdem Warnhinweise stereoskopisch dargestellt werden. In Fig. 17 ist ein Wamhinweis für einen Stau gezeigt, der in einer weit zum Betrachter hin versetzten Ebene dargestellt ist.

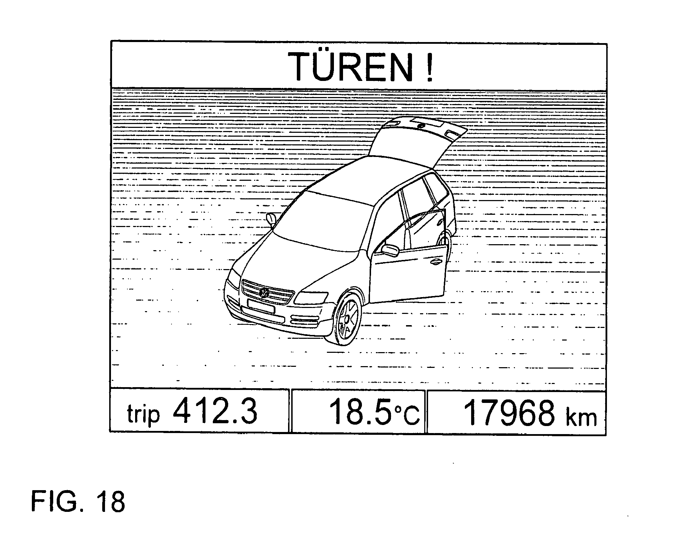

Des Weiteren können in Untermenüs Informationen zum Fahrzeug dargestellt werden. Hierbei werden Darstellungen des Außenraums oder Innenraums des Fahrzeugs gewählt, bei denen die für den Betrachter relevanten Informationen besonders einfach und intuitiv erfasst werden können. In Fig. 18 ist beispielsweise ein Fahrzeug stereoskopisch dargestellt. Bei dieser Darstellung sieht der Betrachter das Fahrzeug von schräg oben. Dabei sind für ihn sehr schnell die offenen Türen zusammen mit dem Hinweis "TÜREN!" erfassbar.

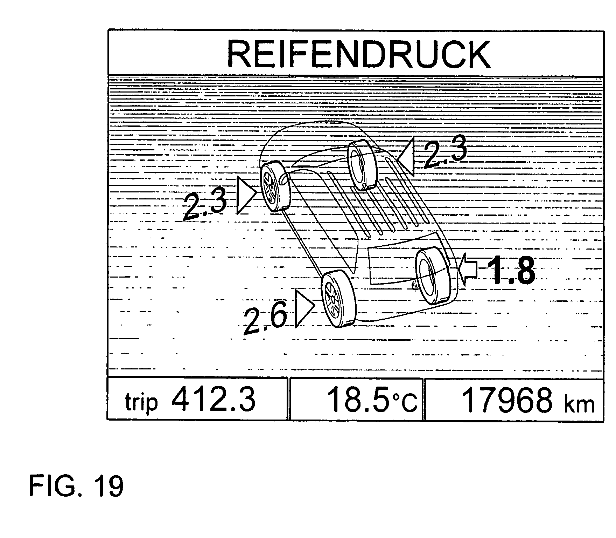

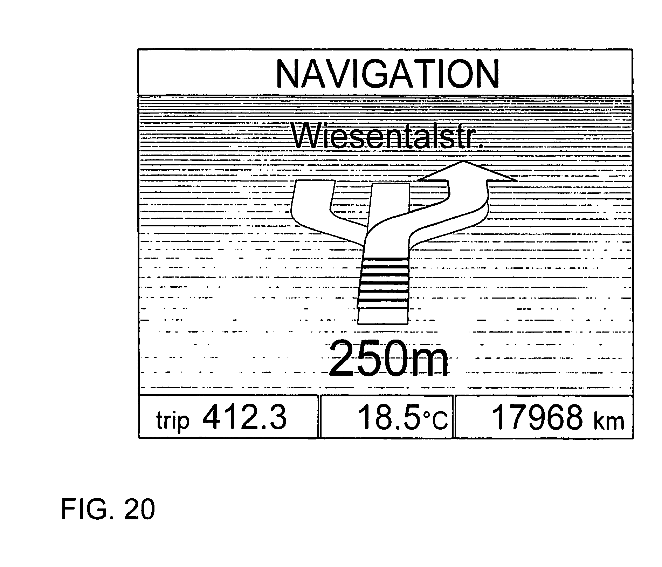

In Fig. 19 sind die Reifen des Fahrzeugs hervorgehoben dargestellt, wobei ein Warnhinweis für einen zu niedrigen Reifendruck im rechten hinteren Rad gegeben wird. In Fig. 20 ist ein Untermenü des Navigationssystems gezeigt. Der Straßenverlauf wird, wie er sich dem Betrachter in der realen Welt darbietet, stereoskopisch dargestellt, wobei der zu wählende Fahrweg dreidimensional oberhalb des dargestellten Fahrbahnverlaufs gezeigt ist.

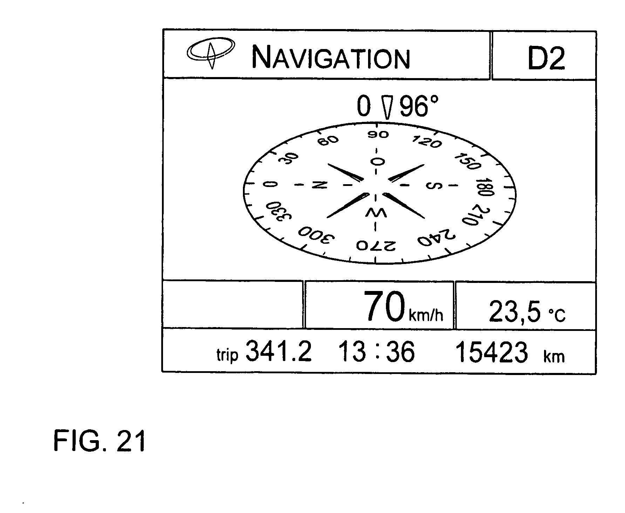

Schließlich ist in Fig. 21 eine Kompassdarstellung des Navigationssystems gezeigt, bei der eine Kompassscheibe schräg von oben betrachtet wird, wobei die Scheibe dreidimensional dargestellt ist. Die dreidimensionale Anzeige des Kompass führt zu einer verbesserten mentalen Übertragung der Darstellung in die Fahrumgebung durch den Fahrer.

### BEZUGSZEICHENLISTE

- 1: Steuereinheit
- 2: Anzeigeeinheit
- 3: Maske
- 4: Fahrzeugbus
- 5: Bedieneinrichtung
- 6: Augen eines Betrachters
- 7: Sichtfächer
- 8: Windschutzscheibe
- 9: Rundinstrument
- 10: halbdurchlässiger Spiegel
- 11: Einrichtung zum Verlängern des optischen Weges
- 12: Sichtlinie für dreidimensionale Betrachtung
- 13: Speichereinheit

## Patentansprüche

1. Verfahren zur Darstellung von Informationen in einem Verkehrsmittel, bei dem die Informationen in Form von hierarchischen Menüstrukturen dargestellt werden,
wobei die Darstellung stereoskopisch erfolgt, wobei zumindest zwei verschiedene Menüs oder Menüpunkte für den Betrachter in verschiedenen Entfernungen erscheinen,
**dadurch gekennzeichnet,**
**dass** die Menüs auf einem stereoskopisch dargestellten sich drehenden Ring angeordnet sind.

2. Verfahren nach Anspruch 1,
**dadurch gekennzeichnet,**
**dass** Menüs oder Menüpunkte bezogen auf eine Referenzebene in einer zu dem Betrachter hin versetzten Ebene dargestellt werden.

3. Verfahren nach Anspruch 2,
**dadurch gekennzeichnet,**
**dass** zu dem Betrachter hin versetzte Menüs oder Menüpunkte teiltransparent dargestellt werden.

4. Verfahren nach einem vorstehenden Ansprüche,
**dadurch gekennzeichnet,**
**dass** Menüs oder Menüpunkte bezogen auf eine Referenzebene in einer von dem Betrachter weg versetzten Ebene dargestellt werden.

5. Verfahren nach Anspruch 4,
**dadurch gekennzeichnet,**
**dass** von dem Betrachter weg versetzte Menüs oder Menüpunkte unscharf dargestellt werden.

6. Verfahren nach einem der vorstehenden Ansprüche,
**dadurch gekennzeichnet,**
**dass** nach einer Auswahl eines Menüpunkts das diesem Menüpunkt zugeordnete Untermenü in einer Fläche geöffnet wird, die um eine Achse gedreht wird, bis die Fläche des Untermenüs in einer zu einer Referenzebene parallelen Ebene dargestellt wird.

7. Verfahren nach Anspruch 6,
**dadurch gekennzeichnet,**
**dass** die Drehachse vertikal oder horizontal ausgerichtet ist.

8. Verfahren nach einem der vorstehenden Ansprüche,
**dadurch gekennzeichnet,**
**dass** die Auswahl von Menüpunkten durch Gesten erfolgt.

9. Verfahren nach einem der Ansprüche 1 bis 7,
**dadurch gekennzeichnet,**
**dass** die Auswahl von Menüpunkten durch Berührung eines Displays für die stereoskopische Darstellung erfolgt.

10. Verfahren nach Anspruch 9,
**dadurch gekennzeichnet,**
**dass** die Auswahl des Menüs durch Berührung des Displays bei einer virtuellen Taste erfolgt, wobei nach der Berührung die Taste vom Betrachter weg versetzt dargestellt wird.

11. Verfahren nach einem der vorstehenden Ansprüche,
**dadurch gekennzeichnet,**
**dass** Information auf einer senkrecht zur Blickrichtung eines Betrachters ausgerichteten Fläche dargestellt wird und zu dieser Information gehörige Detailinformation auf der Rückseite dieser Fläche dargestellt wird, wobei die Rückseite für den Betrachter durch stereoskopische Drehung der Fläche um 180° sichtbar wird.

12. Verfahren nach einem der vorstehenden Ansprüche,
**dadurch gekennzeichnet,**
**dass** Information, die einen Teil des Verkehrsmittels betrifft, **dadurch** dargestellt wird, dass die stereoskopische Repräsentation dieses Teils aus der Richtung des körperlichen Teils im Verkehrsmittel ins Blickfeld des Betrachters wandert.

13. Verfahren nach einem der vorstehenden Ansprüche,
**dadurch gekennzeichnet,**
**dass** die dreidimensionalen Bewegungen einer Bedieneinrichtung mittels der stereoskopischen Darstellung dreidimensional wiedergegeben werden.

14. Verfahren nach einem der vorstehenden Ansprüche,
**dadurch gekennzeichnet,**
**dass** ein Menü eine stereoskopische Augpunktdarstellung des Verkehrsmittels oder eines Teils davon umfasst.

15. Verfahren nach einem der vorstehenden Ansprüche,
**dadurch gekennzeichnet,**
**dass** ein Menü eine stereoskopische Darstellung des Innenraums des Verkehrsmittels umfasst, bei der Licht-, Audio- und/oder Klimaquellen im Innenraum dargestellt sind.

16. Verfahren nach einem der vorstehenden Ansprüche,
**dadurch gekennzeichnet,**
**dass** ein Menü die stereoskopische Darstellung eines Kompass umfasst.

17. Verfahren nach Anspruch 16,
**dadurch gekennzeichnet,**
**dass** die Darstellung des Kompass eine stereoskopisch dargestellte Scheibe umfasst, die von schräg oben betrachtet wird.

18. Verfahren nach einem der vorstehenden Ansprüche,
**dadurch gekennzeichnet,**
**dass** die Darstellungen autostereoskopisch erfolgen.

19. Kraftfahrzeug, umfassend eine Vorrichtung, durch welche Informationen in Form von hierarchischen Menüstrukturen darstellbar sind, mit einer Steuereinheit und einer Anzeigeeinheit zur stereoskopischen und/oder autostereoskopischen Darstellung von Informationen, wobei mit der Steuereinheit die Darstellung der Menüs so berechenbar ist, dass zumindest zwei verschiedene Menüs oder Menüpunkte von der Anzeigeeinheit für den Betrachter in verschiedenen Entfernungen darstellbar sind,
**dadurch gekennzeichnet,**
**dass** mit der Steuereinheit die Darstellung der Menüs so berechenbar ist, dass die Menüs auf einem stereoskopisch dargestellten sich drehenden Ring angeordnet sind.

## Claims

1. Method for representing information in a means of transportation, in which method the information is represented in the form of hierarchical menu structures, wherein the representation is effected stereoscopically, wherein at least two different menus or menu items appear at different distances to the viewer, **characterized in that** the menus are arranged on a rotating, stereoscopically represented ring.

2. Method according to Claim 1, **characterized in that,** with respect to a reference plane, menus or menu items are represented in a plane which is offset towards the viewer.

3. Method according to Claim 2, **characterized in that** menus or menu items which are offset towards the viewer are represented in a partially transparent form.

4. Method according to one of the preceding claims, **characterized in that,** with respect to a reference plane, menus or menu items are represented in a plane which is offset away from the viewer.

5. Method according to Claim 4, **characterized in that** menus or menu items which are offset away from the viewer are represented out of focus.

6. Method according to one of the preceding claims, **characterized in that,** after a menu item has been selected, the submenu which is assigned to this menu item is opened in a surface which is rotated about an axis until the surface of the submenu is represented in a plane which is parallel to a reference plane.

7. Method according to Claim 6, **characterized in that** the rotational axis is oriented vertically or horizontally.

8. Method according to one of the preceding claims, **characterized in that** the menu items are selected by means of gestures.

9. Method according to one of Claims 1 to 7, **characterized in that** menu items are selected by touching a display for the stereoscopic representation.

10. Method according to Claim 9, **characterized in that** the menu is selected by touching the display using a virtual button, wherein the button is represented offset away from the viewer after it has been touched.

11. Method according to one of the preceding claims, **characterized in that** information is represented on a surface which is oriented perpendicularly with respect to the viewing direction of a viewer, and detailed information which is associated with this information is represented on the rear of this surface, wherein the rear can be viewed by the viewer by stereoscopically rotating the surface through 180°.

12. Method according to one of the preceding claims, **characterized in that** information which relates to part of the means of transportation is represented by virtue of the fact that the stereoscopic representation of this part migrates out of the direction of the body part in the means of transportation into the viewer's field of vision.

13. Method according to one of the preceding claims, **characterized in that** the three-dimensional movements of an operator control device are represented in three-dimensional form by means of the stereoscopic representation.

14. Method according to one of the preceding claims, **characterized in that** a menu comprises a stereoscopic eye point representation of the means of transportation or of part thereof.

15. Method according to one of the preceding claims, **characterized in that** a menu comprises a stereoscopic representation of the interior of the means of transportation, in which representation light sources, audio sources and/or air conditioning sources in the interior are represented.

16. Method according to one of the preceding claims, **characterized in that** a menu comprises the stereoscopic representation of a compass.

17. Method according to Claim 16, **characterized in that** the representation of the compass comprises a stereoscopically represented disc which is viewed obliquely from above.

18. Method according to one of the preceding claims, **characterized in that** the representations are effected in an auto-stereoscopic fashion.

19. Motor vehicle, comprising a device which can be used to represent information in the form of hierarchical menu structures, having a control unit and a display unit for stereoscopically and/or autostereoscopically representing information, wherein the control unit can be used to calculate the representation of the menus in such a way that at least two different menus or menu items can be represented by the display unit at different distances to the viewer, **characterized in that** the control unit can be used to calculate the representation of the menus in such a way that the menus are arranged on a rotating, stereoscopically represented ring.

## Revendications

1. Procédé de représentation d'informations dans un moyen de transport, dans lequel les informations sont représentées sous la forme de structures de menu hiérarchiques, la représentation se produisant de façon stéréoscopique, au moins deux menus ou points de menu différents apparaissant à l'observateur à des distances différentes, **caractérisé en ce que** les menus sont disposés sur un anneau tournant représenté de façon stéréoscopique.

2. Procédé selon la revendication 1, **caractérisé en ce que** les menus ou les points de menu sont représentés dans un plan se déplaçant en direction de l'observateur par rapport à un plan de référence.

3. Procédé selon la revendication 2, **caractérisé en ce que** les menus ou points de menu se déplaçant en direction de l'observateur sont représentés de façon partiellement transparente.

4. Procédé selon l'une quelconque des revendications précédentes, **caractérisé en ce que** les menus ou les points de menu sont représentés dans un plan s'éloignant de l'observateur par rapport à un plan de référence.

5. Procédé selon la revendication 4, **caractérisé en ce que** les menus ou points de menu s'éloignant de l'observateur sont représentés de façon floue.

6. Procédé selon l'une quelconque des revendications précédentes, **caractérisé en ce qu'**après avoir choisi un point de menu, le sous-menu associé au point de menu s'ouvre dans une surface qui est tournée autour d'un axe, jusqu'à ce que la surface du sous-menu soit représentée dans un plan parallèle au plan de référence.

7. Procédé selon la revendication 6, **caractérisé en ce que** l'axe de rotation est orienté verticalement ou horizontalement.

8. Procédé selon l'une quelconque des revendications précédentes, **caractérisé en ce que** le choix des points de menu est effectué par le biais de gestes.

9. Procédé selon l'une quelconque des revendications 1 à 7, **caractérisé en ce que** le choix des points de menu se fait en touchant un écran affichant la représentation stéréoscopique.

10. Procédé selon la revendication 9, **caractérisé en ce que** le choix du menu se fait en touchant l'écran au moyen d'une touche virtuelle, la touche étant représentée dans un mouvement d'éloignement par rapport à l'observateur après avoir été touchée.

11. Procédé selon l'une quelconque des revendications précédentes, **caractérisé en ce que** l'information est représentée sur une surface orientée perpendiculairement à la direction du regard d'un observateur et **en ce que** les informations détaillées appartenant à cette information sont représentées sur l'arrière de cette surface, l'arrière étant visible par l'observateur par rotation stéréoscopique de la surface de 180°.

12. Procédé selon l'une quelconque des revendications précédentes, **caractérisé en ce que** l'information concernant une partie du moyen de transport est représentée par le fait que la représentation stéréoscopique de cette partie se déplace depuis la direction de la partie du corps dans le moyen de transport jusque dans le champ de vision de l'observateur.

13. Procédé selon l'une quelconque des revendications précédentes, **caractérisé en ce que** les mouvements tridimensionnels d'un dispositif d'utilisation sont restitués en trois dimensions à l'aide de la représentation stéréoscopique.

14. Procédé selon l'une quelconque des revendications précédentes, **caractérisé en ce qu'**un menu comprend une représentation du point de vue stéréoscopique du moyen de transport ou d'une partie de celui-ci.

15. Procédé selon l'une quelconque des revendications précédentes, **caractérisé en ce qu'**un menu comprend une représentation stéréoscopique de l'intérieur du moyen de transport dans laquelle les sources lumineuses, audio et/ou de climatisation présentes dans l'habitacle sont représentées.

16. Procédé selon l'une quelconque des revendications précédentes, **caractérisé en ce qu'**un menu comprend la représentation stéréoscopique d'une boussole.

17. Procédé selon la revendication 16, **caractérisé en ce que** la représentation de la boussole comprend un disque observé de façon oblique par en haut représenté de façon stéréoscopique.

18. Procédé selon l'une quelconque des revendications précédentes, **caractérisé en ce que** les représentations sont réalisées de façon autostéréoscopique.

19. Véhicule automobile, comprenant un dispositif par le biais duquel des informations prenant la forme de structures de menu hiérarchiques peuvent être représentées, avec une unité de commande et une unité d'affichage pour la représentation d'informations stéréoscopique et/ou autostéréoscopique, la représentation des menus pouvant être calculée de telle sorte avec l'unité de commande qu'au moins deux menus ou points de menu différents peuvent être représentés à des distances différentes de l'observateur par l'unité d'affichage, **caractérisé en ce que** la représentation des menus peut être calculée de telle sorte avec l'unité de commande que les menus sont disposés sur un anneau tournant représenté de façon stéréoscopique.
